(19) Europäisches Patentamt
European Patent Office
Office européen des brevets

(11) **EP 3 695 500 B1**

(12) **EUROPÄISCHE PATENTSCHRIFT**

(45) Veröffentlichungstag und Bekanntmachung des Hinweises auf die Patenterteilung:
**28.12.2022 Patentblatt 2022/52**

(21) Anmeldenummer: **18810914.4**

(22) Anmeldetag: **15.11.2018**

(51) Internationale Patentklassifikation (IPC):
**H02M 5/458** *(2006.01)*    **H02M 1/00** *(2006.01)*
**H02M 3/155** *(2006.01)*    **H02M 1/32** *(2007.01)*

(52) Gemeinsame Patentklassifikation (CPC):
**H02M 5/458;** H02M 1/0067; H02M 1/32;
H02M 3/155

(86) Internationale Anmeldenummer:
**PCT/EP2018/081343**

(87) Internationale Veröffentlichungsnummer:
**WO 2019/105745 (06.06.2019 Gazette 2019/23)**

(54) **GRUPPE VON ZWISCHENKREISUMRICHTERN MIT GEZIELTER KOPPLUNG DER ZWISCHENKREISUMRICHTER MITEINANDER**

INTERMEDIATE CIRCUIT CONVERTER WITH TARGETED COUPLING WITH AT LEAST ONE OTHER INTERMEDIATE CIRCUIT CONVERTER

ONDULEUR À CIRCUIT INTERMÉDIAIRE DOTÉ DE L'ACCOUPLEMENT CIBLÉ AVEC AU MOINS UN AUTRE ONDULEUR À CIRCUIT INTERMÉDIAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.11.2017 EP 17203953**

(43) Veröffentlichungstag der Anmeldung:
**19.08.2020 Patentblatt 2020/34**

(73) Patentinhaber: **Siemens Aktiengesellschaft 80333 München (DE)**

(72) Erfinder:
• **LANGE, Robert**
**08451 Crimmitschau (DE)**
• **SEJA, Marco**
**09661 Rossau / OT Seifersbach (DE)**

(56) Entgegenhaltungen:
CN-A- 101 499 771    DE-A1-102014 114 248
JP-A- H10 164 862    JP-A- 2005 176 475
US-A1- 2013 020 989    US-A1- 2017 229 994

EP 3 695 500 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung geht aus von einer Gruppe von Zwischenkreisumrichter,

- wobei die Zwischenkreisumrichter jeweils einen Zwischenkreis mit einem Zwischenkreiskondensator aufweisen,
- wobei die Zwischenkreisumrichter und mit ihnen die Zwischenkreiskondensatoren über einen jeweiligen eingangsseitigen Gleichrichter mit einer Energieversorgung verbunden sind und über einen jeweiligen ausgangsseitigen Wechselrichter mit einer jeweiligen Last verbunden sind,
- wobei die Zwischenkreisumrichter jeweils einen ersten und einen zweiten Anschluss aufweisen, die über eine jeweilige erste und eine jeweilige zweite Leitung mit einem jeweiligen ersten und einem jeweiligen zweiten Potenzial des jeweiligen Zwischenkreises verbunden sind.

Elektrische Einrichtungen - beispielsweise größere elektrisch angetriebene Maschinen - weisen oftmals eine Vielzahl von elektrischen Verbrauchern (Lasten) auf. Die Lasten werden in vielen Fällen über einen jeweiligen Zwischenkreisumrichter aus einem gemeinsamen elektrischen Versorgungsnetz mit elektrischer Energie versorgt. Zur Versorgung mit elektrischer Energie werden die Gleichrichter an das elektrische Versorgungsnetz angeschlossen.

In manchen Fällen arbeiten die Lasten nicht permanent als Verbraucher, sondern zeitweise auch als Energielieferanten. Ein Beispiel sind elektrische Antriebe, die zum Abbremsen einer bewegten Masse verwendet werden. In derartigen Fällen wird durch entsprechende Ansteuerung des Wechselrichters Energie in den Zwischenkreis zurückgespeist. In manchen Fällen ist der Gleichrichter als gesteuerter Gleichrichter ausgebildet. In diesem Fall kann die in den Zwischenkreis zurückgespeiste Energie über den Gleichrichter weiter in das Versorgungsnetz zurückgespeist werden. In anderen Fällen ist der Gleichrichter jedoch als ungesteuerter Gleichrichter ausgebildet, insbesondere als einfacher Dioden-Brückengleichrichter. In diesen Fällen muss die elektrische Energie anderweitig aus dem Zwischenkreis abgeführt werden.

Eine Möglichkeit besteht darin, an den Zwischenkreis sogenannte Bremswiderstände anzuschalten, in welchen die rückgespeiste elektrische Energie in Wärme umgesetzt wird. Oftmals sind jedoch mehrere parallel angeordnete Zwischenkreise vorhanden. In diesem Fall können die ersten Potenziale der Zwischenkreise und die zweiten Potenziale der Zwischenkreise miteinander verbunden sein. Dadurch kann ein Energiefluss von einem der Zwischenkreise in einen anderen Zwischenkreise erfolgen, so dass die in den einen der Zwischenkreise rückgespeiste elektrische Energie von dem anderen Zwischenkreis aufgenommen und an dessen Last weitergegeben werden kann.

Im einfachsten Fall erfolgt eine direkte Verbindung der ersten Potenziale der Zwischenkreise und der zweiten Potenziale der Zwischenkreise miteinander. Diese Ausgestaltung weist zwar eine sehr hohe Dynamik auf. Beim Anschalten der Gleichrichter an das Versorgungsnetz ist jedoch nicht mehr in definierter Weise gewährleistet, dass jeder Zwischenkreis über seinen Gleichrichter geladen wird. Ursachen hierfür sind bei gleichartig ausgelegten und dimensionierten Zwischenkreisumrichtern Bauteiltoleranzen, bei unterschiedlich dimensionierten oder unterschiedlich ausgelegten Zwischenkreisumrichtern zusätzlich unterschiedliche Kennlinien der verwendeten Bauelemente. Derartige undefinierte Zustände können dazu führen, dass beim Zuschalten der gemeinsamen Energieversorgung mehrere Zwischenkreise vollständig oder zumindest im Wesentlichen über den Gleichrichter eines einzelnen Zwischenkreisumrichters geladen werden. Dadurch ist es möglich, dass der Gleichrichter dieses Zwischenkreisumrichters überlastet und beschädigt bzw. zerstört wird.

Zur Vermeidung derartiger Schäden sind verschiedene Vorgehensweisen bekannt.

Eine bekannte Vorgehensweise besteht darin, Bauelemente der Zwischenkreisumrichter - insbesondere die Gleichrichter - überdimensioniert auszulegen. Diese Vorgehensweise führt zwar zu einem an sich sicheren Betrieb, hat aber erhöhte Kosten zur Folge. Weiterhin können im Falle einer direkten Verbindung in den Verbindungsleitungen hohe Ausgleichsströme fließen, die zur Zerstörung weiterer Geräte, unter Umständen sogar zu Bränden führen können.

Eine weitere bekannte Vorgehensweise besteht darin, in den Verbindungsleitungen zwischen den ersten und den zweiten Potenzialen der Zwischenkreise Widerstände anzuordnen. Bei den Widerständen kann es sich insbesondere um PTC-Widerstände (PTC = positive temperature coeffizient) handeln, d.h. um Widerstände, deren Widerstandswert bei einer Erwärmung deutlich ansteigt. Diese Vorgehensweise schützt zwar die Gleichrichter und auch die übrigen Komponenten der Zwischenkreisumrichter vor Überlastung, führt jedoch zu einer relativ geringen Dynamik und zu hohen Verlustleistungen über die Widerstände.

Eine weitere Möglichkeit besteht darin, die Widerstände durch Parallelschaltungen von Dioden zu ersetzen, wobei die Dioden der jeweiligen Parallelschaltung in entgegengesetzter Richtung leiten. Diese Vorgehensweise führt zwar zu relativ geringen Verlustleistungen, ist aber insbesondere nicht kurzschlussfest.

Eine weitere Möglichkeit besteht darin, den Gleichrichtern zum Versorgungsnetz hin Drosseln vorzuordnen. Diese Vorgehensweise schützt zwar die Gleichrichter, bewirkt aber Verlustleistungen außerhalb der Zwischenkreisumrichter. Ferner ist auch diese Ausgestaltung nicht kurzschlussfest.

Aus der US 2017/0 229 994 A1 ist ein Zwischenkreisumrichter bekannt. Dieser Zwischenkreisumrichter weist einen Zwischenkreis mit einem Zwischenkreiskondensator auf. Der Zwischenkreisumrichter und mit ihm der Zwischenkreiskondensator ist über einen eingangsseitigen Gleichrichter mit einer Energieversorgung und über einen ausgangsseitigen Wechselrichter mit einer Last verbunden. Der Zwischenkreisumrichter weist einen ersten und einen zweiten Anschluss auf, die über eine erste und eine zweite Leitung mit einem ersten und einem zweiten Potenzial des Zwischenkreises verbunden sind. In der ersten Leitung ist ein erstes Schaltelement angeordnet, dem eine erste Diode parallel geschaltet ist. Bei geöffnetem erstem Schaltelement kann der Zwischenkreiskondensator über die erste Diode zwar geladen werden, nicht aber entladen. Bei geschlossenem erstem Schaltelement kann der Zwischenkreiskondensator über das erste Schaltelement (geringfügig) entladen werden. Der Zwischenkreisumrichter weist eine Steuereinrichtung auf, welche das erste Schaltelement in Abhängigkeit von einer im Zwischenkreis herrschenden Zwischenkreisspannung ansteuert. Die Steuereinrichtung steuert im Gegentakt zu dem ersten Schaltelement weiterhin ein zweites Schaltelement an. Dem zweiten Schaltelement ist eine zweite Diode parallel geschaltet. Über die beiden Schaltelemente wird eine Reihenschaltung einer Induktivität und eines Kondensators abwechselnd an den Zwischenkreis angeschaltet.

Der JP H10 164 862 A ist ein ähnlicher Offenbarungsgehalt zu entnehmen.

Die JP 2005 176475 A lehrt die elektrische Kopplung von zwei Zwischenkreisumrichtern über deren Zwischenkreise, wobei ein Energiefluss zwischen den Zwischenkreisumrichtern mittels entsprechender Schaltelemente in den jeweiligen elektrischen Verbindungen zu den beiden Potentialen der entsprechenden Zwischenkreise beeinflussbar ist.

Die Aufgabe der vorliegenden Erfindung besteht darin, Möglichkeiten zu schaffen, mittels derer auf einfache und zuverlässige Weise sowohl ein individueller, voneinander unabhängiger Betrieb der Zwischenkreisumrichter als auch ein Belastungsausgleich zwischen den Zwischenkreisumrichtern möglich ist.

Die Aufgabe wird durch eine Gruppe von Zwischenkreisumrichtern mit den Merkmalen des Anspruchs 1 gelöst. Vorteilhafte Ausgestaltungen der Gruppe von Zwischenkreisumrichtern sind Gegenstand der abhängigen Ansprüche 2 bis 10.

Solange das jeweilige erste Schaltelement geöffnet bleibt, wird der jeweilige Zwischenkreisumrichter unabhängig von den anderen Zwischenkreisumrichtern betrieben, deren erste und zweite Potenziale mit dem ersten und dem zweiten Anschluss des genannten Zwischenkreisumrichters verbunden sind. Je nach Ausmaß, in dem das jeweilige erste Schaltelement geschlossen wird, ist jedoch ein Energiefluss aus dem jeweiligen Zwischenkreis heraus zu den Zwischenkreisen der anderen Zwischenkreisumrichter möglich. Dadurch ist es möglich, den Zwischenkreis des entsprechenden Zwischenkreisumrichters nach Bedarf von den Zwischenkreisen der anderen Zwischenkreisumrichter zu entkoppeln oder mit ihnen zu koppeln.

Es ist möglich, dass die Anschlüsse interne, eher fiktive Anschlüsse sind. Es ist aber auch möglich, dass die Anschlüsse von außen zugängliche Anschlüsse sind, an die jeweils eine Leitung lösbar angeschlossen werden kann. Beispiele derartiger Anschlüsse sind Schraubklemmen, Steckerbuchsen, Schneidklemmen und dergleichen mehr.

Im einfachsten Fall steuert die Steuereinrichtung mindestens eines der Zwischenkreisumrichter dessen erstes Schaltelement ausschließlich in Abhängigkeit von der im Zwischenkreis dieses Zwischenkreisumrichters herrschenden Zwischenkreisspannung an. Insbesondere kann die Steuereinrichtung das erste Schaltelement schließen bzw. durchschalten, wenn die Zwischenkreisspannung - also die Differenz zwischen dem ersten und dem zweiten Potenzial dieses Zwischenkreises - einen vorbestimmten Wert überschreitet. Das Tastverhältnis - also der Prozentanteil an einer Periode, während dessen die Steuereinrichtung das erste Schaltelement schließt - kann von der Steuereinrichtung anhand einer vorgegebenen Funktion bestimmt werden, der als Eingangsparameter die Zwischenkreisspannung zugeführt wird und die als Ausgangsparameter das Tastverhältnis liefert.

Die Steuereinrichtung kann mindestens eines der Zwischenkreisumrichter dessen erstes Schaltelement in Abhängigkeit von der im Zwischenkreis dieses Zwischenkreisumrichters herrschenden Zwischenkreisspannung und zusätzlich in Abhängigkeit von einem über die erste Leitung oder die zweite Leitung dieses Zwischenkreisumrichters fließenden Strom ansteuern. So kann die Steuereinrichtung in Abhängigkeit von der Zwischenkreisspannung entscheiden, ob sie das erste Schaltelement überhaupt schließt, und das erste Schaltelement jeweils wieder öffnen, wenn der dem Zwischenkreis entnommene Strom einen vorbestimmten Wert überschreitet. Dadurch können - je nach Messstelle für den Strom - durch rechtzeitiges Abregeln bei Erreichen eines kritischen Stromes beispielsweise ein Bauelementeschutz realisiert werden oder ein definierter Energieausgleich zwischen den Zwischenkreisen realisiert werden.

Es ist auch möglich, dass die Steuereinrichtung dieses Zwischenkreisumrichters dessen erstes Schaltelement in Abhängigkeit vom Produkt der im Zwischenkreis dieses Zwischenkreisumrichters herrschenden Zwischenkreisspannung und dem über die erste Leitung oder die zweite Leitung dieses Zwischenkreisumrichters fließenden Strom ansteuert. In diesem Fall kann die Steuereinrichtung beispielsweise in Abhängigkeit von der Zwischenkreisspannung entscheiden, ob sie das erste Schaltelement überhaupt schließt, und das erste Schaltelement jeweils wieder öffnen, wenn die dem Zwischenkreis entnommene Leistung einen vorbestimmten Wert überschreitet.

In einem von der Erfindung abweichenden Fall sind die zweiten Leitungen, die mit dem zweiten Potenzial des jeweiligen Zwischenkreises verbunden ist, einfache, direkte Verbindungen des jeweiligen zweiten Anschlusses mit dem jeweiligen Zwischenkreis.

Es ist jedoch vorgesehen,

- dass in der zweiten Leitung mindestens eines der Zwischenkreisumrichter ein zweites Schaltelement angeordnet ist, dem eine zweite Diode parallel geschaltet ist, so dass bei geöffnetem zweitem Schaltelement der Zwischenkreiskondensator dieses Zwischenkreisumrichters über die zweite Diode zwar geladen werden kann, nicht aber entladen werden kann und bei geschlossenem zweitem Schaltelement der Zwischenkreiskondensator dieses Zwischenkreisumrichters über das zweite Schaltelement zumindest entladen werden kann,
- dass die Steuereinrichtung dieses Zwischenkreisumrichters zusätzlich zum ersten Schaltelement dieses Zwischenkreisumrichters auch das zweite Schaltelement in Abhängigkeit von der im Zwischenkreis dieses Zwischenkreisumrichters herrschenden Zwischenkreisspannung ansteuert und
- dass ein zweiter Diodenknotenpunkt, an dem die Freilaufdiode dieses Zwischenkreisumrichters mit der zweiten Leitung dieses Zwischenkreisumrichters verbunden ist, zwischen dem zweiten Anschluss dieses Zwischenkreisumrichters und einem zweiten Schaltelement angeordnet ist.

Dadurch ist eine zweipolige Trennung des Zwischenkreises von den Anschlüssen möglich. Die Betriebssicherheit wird dadurch erhöht.

Vorzugsweise steuert die Steuereinrichtung dieses Zwischenkreisumrichters das zweite Schaltelement gleichartig zum ersten Schaltelement dieses Zwischenkreisumrichters an. Wenn die Steuereinrichtung also das erste Schaltelement öffnet, so öffnet sie auch das zweite Schaltelement. Gleiches gilt für das Schließen der Schaltelemente.

Vorzugsweise ist in der zweiten Leitung dieses Zwischenkreisumrichters zwischen dem zweiten Diodenknotenpunkt und dem zweiten Anschluss dieses Zwischenkreisumrichters eine zweite Induktivität angeordnet. Dadurch ergibt sich ein symmetrischer Aufbau des Zwischenkreisumrichters. Im Falle des Vorhandenseins der zweiten Induktivität können die erste Induktivität und die zweite Induktivität magnetisch miteinander gekoppelt seien. Alternativ können sie als Einzelinduktivitäten ausgebildet sein.

Vorzugsweise ist vorgesehen,

- dass dieser Zwischenkreisumrichter einen zusätzlichen Kondensator aufweist, der die erste und die zweite Leitung dieses Zwischenkreisumrichters miteinander verbindet,
- dass ein erster Kondensatorknotenpunkt, an dem der zusätzliche Kondensator mit der ersten Leitung dieses Zwischenkreisumrichters verbunden ist, zwischen dem ersten Anschluss und der ersten Induktivität dieses Zwischenkreisumrichters angeordnet ist und
- dass ein zweiter Kondensatorknotenpunkt, an dem der zusätzliche Kondensator mit der zweiten Leitung dieses Zwischenkreisumrichters verbunden ist, zwischen dem zweiten Anschluss dieses Zwischenkreisumrichters und der zweiten Induktivität angeordnet ist.

Diese Ausgestaltung ist prinzipiell auch dann realisierbar, wenn die zweite Induktivität nicht vorhanden ist. In diesem Fall ist der zweite Kondensatorknotenpunkt zwischen dem zweiten Anschluss und dem zweiten Diodenknotenpunkt angeordnet. Wenn auch das zweite Schaltelement und die zweite Diode entfallen, kann der zweite Kondensatorknotenpunkt an beliebiger Stelle mit der zweiten Leitung verbunden sein.

Es ist möglich, dass die den ersten Schaltelementen parallel geschaltete erste Diode eine eigenständige, separat vorhandene Diode ist. Vorzugsweise handelt es sich bei der ersten Diode mindestens eines der Zwischenkreisumrichter jedoch um eine dem ersten Schaltelement dieses Zwischenkreisumrichters intrinsische Diode. Gleiches gilt, falls vorhanden, für eine einem zweiten Schaltelement parallel geschaltete zweite Diode.

Die eingangsseitigen Gleichrichter können als gesteuerte Gleichrichter ausgebildet sein. Vorzugsweise ist der eingangsseitige Gleichrichter mindestens eines der Zwischenkreisumrichter jedoch als ungesteuerter Gleichrichter ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1 einen Zwischenkreisumrichter,
FIG 2 einen weiteren Zwischenkreisumrichter und
FIG 3 eine Gruppe von Zwischenkreisumrichtern.

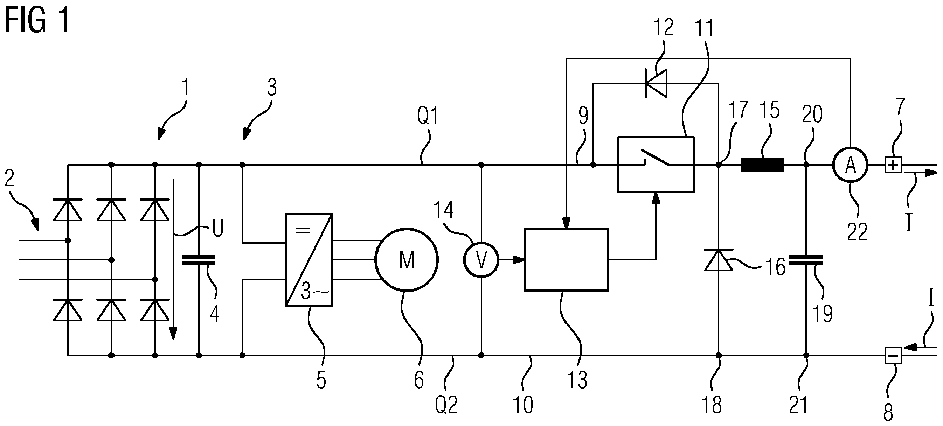

FIG 1 zeigt eine grundlegende Ausgestaltung eines Zwischenkreisumrichters.

Gemäß FIG 1 weist der Zwischenkreisumrichter einen eingangsseitigen Gleichrichter 1 auf. Der eingangsseitige Gleichrichter 1 ist mit einer eingangsseitigen Energieversorgung 2 verbunden, beispielsweise einem üblichen dreiphasigen Drehstromnetz mit einer Nennspannung von beispielsweise 400 V oder von 690 V. Der Gleichrichter 1 ist in der Regel als ungesteuerter Gleichrichter ausgebildet, also als reiner Diodengleichrichter. Prinzipiell kann der Gleichrichter 1 aber auch als gesteuerter, rückspeisefähiger Umrichter ausgebildet sein.

Über den eingangsseitigen Gleichrichter 1 ist ein Zwischenkreis 3 mit der Energieversorgung 2 verbunden. Der Zwischenkreis 3 weist unter anderem einen Zwischenkreiskondensator 4 auf. Somit ist auch der Zwischenkreiskondensator 4 über den eingangsseitigen Gleichrichter 1 mit der Energieversorgung 2 verbunden.

Der Zwischenkreisumrichter weist weiterhin einen ausgangsseitigen Wechselrichter 5 auf. Über den ausgangsseitigen Wechselrichter 5 sind der Zwischenkreis 3 und der Zwischenkreiskondensator 4 mit einer Last 6 verbunden, beispielsweise einer elektrischen Maschine.

In der Regel weist der Zwischenkreisumrichter weiterhin zwischen dem eingangsseitigen Gleichrichter 1 und dem Zwischenkreiskondensator 4 eine Ladeschaltung auf, die aus einem Widerstand und einem dem Widerstand parallel geschalteten Schalter besteht. Beim Zuschalten der Energieversorgung 2 ist der Schalter zunächst geöffnet, so dass der Zwischenkreiskondensator 4 nur über den Widerstand und damit strombegrenzt geladen wird. Dadurch wird eine Überlastung des eingangsseitigen Gleichrichters 1 vermieden. Nach dem teilweisen oder vollständigen Laden des Zwischenkreiskondensators 4 wird der Schalter geschlossen, so dass der Zwischenkreiskondensator 4 nunmehr niederohmig mit dem eingangsseitigen Gleichrichter 1 verbunden ist. Die Ladeschaltung und der Betrieb der Ladeschaltung sind Fachleuten allgemein bekannt. Sie sind im Rahmen der vorliegenden Erfindung jedoch von untergeordneter Bedeutung und daher in den FIG nicht dargestellt.

Der Zwischenkreis 3 weist im Betrieb ein erstes Potenzial Q1 und ein zweites Potenzial Q2 auf. Die Differenz der Potenziale Q1 und Q2 entspricht der Zwischenkreisspannung $U = Q1 - Q2$.

Der Zwischenkreisumrichter weist weiterhin einen ersten Anschluss 7 und einen zweiten Anschluss 8 auf. Der erste Anschluss 7 ist über eine erste Leitung 9 mit dem ersten Potenzial Q1 des Zwischenkreises 3 verbunden. Der zweite Anschluss 8 ist über eine zweite Leitung 10 mit dem zweiten Potenzial Q2 des Zwischenkreises verbunden.

Die Verbindung des zweiten Anschlusses 8 mit dem zweiten Potenzial Q2 kann in der grundlegenden Ausgestaltung gemäß FIG 1 direkt sein. In der ersten Leitung 9 ist jedoch ein erstes Schaltelement 11 angeordnet. Bei dem ersten Schaltelement 11 kann es sich beispielsweise um einen MOSFET handeln. Dem ersten Schaltelement 11 ist eine erste Diode 12 parallel geschaltet. Die erste Diode 12 ist derart geschaltet (gepolt), dass über die erste Diode 12 der Zwischenkreiskondensator 4 zwar geladen werden kann, nicht aber entladen werden kann. Wenn, wie in FIG 1 dargestellt, das erste Potenzial Q1 größer als das zweite Potenzial Q2 ist, ist also die Kathode der ersten Diode 12 zum Zwischenkreis 3 hin angeordnet, die Anode zum ersten Anschluss 7 hin. Wenn das erste Schaltelement 11 geöffnet ist (so dass es also keinen Strom leiten kann), können von den Anschlüssen 7, 8 aus über die erste Diode 12 der Zwischenkreis 3 mit ihm der Zwischenkreiskondensator 4 zwar geladen werden, nicht aber entladen. Die erste Diode 12 kann eine eigenständige Diode sein, also ein vom ersten Schaltelement 11 verschiedenes Bauelement. In der Regel handelt es sich bei der ersten Diode 12 jedoch um eine dem ersten Schaltelement 11 intrinsische Diode.

Der Zwischenkreisumrichter weist weiterhin eine Steuereinrichtung 13 auf, welche das erste Schaltelement 11 ansteuert. Je nach Ansteuerzustand ist das erste Schaltelement 11 entweder völlig geöffnet bzw. gesperrt (kein Stromfluss ist möglich) oder völlig geschlossen bzw. durchgeschaltet (Stromfluss ist möglich). Im durchgeschalteten Zustand ist über das erste Schaltelement 11 zumindest ein Stromfluss dahingehend möglich, dass der Zwischenkreis 3 und mit ihm der Zwischenkreiskondensator 4 über das erste Schaltelement 11 entladen werden können. In manchen Ausgestaltungen des ersten Schaltelements 11 ist sogar ein Stromfluss in beide Richtungen möglich.

Mittels eines Spannungsmessers 14 wird die im Zwischenkreis 3 herrschende Zwischenkreisspannung U erfasst. Der erfasste Spannungswert wird der Steuereinrichtung 13 zugeführt. Die Steuereinrichtung 13 steuert das erste Schaltelement 11 in Abhängigkeit von dem erfassten Spannungswert U an. Insbesondere kann die Steuereinrichtung 13 den erfassten Spannungswert U mit einem vorbestimmten Spannungswert U0 vergleichen. Ist der erfasste Spannungswert U kleiner als der vorbestimmte Spannungswert U0, bleibt das erste Schaltelement 11 geöffnet bzw. gesperrt. Ist der erfasste Spannungswert U größer als der vorbestimmte Spannungswert U0, wird das erste Schaltelement 11 temporär oder permanent geschlossen, bis der erfasste Spannungswert U wieder unter den vorbestimmten Spannungswert U0 sinkt. Ein Ansteigen der Zwischenkreisspannung U kann insbesondere auftreten, wenn die Last 6 als elektrische Maschine ausgebildet ist, die temporär im generatorischen Betrieb arbeiten kann.

Der vorbestimmte Spannungswert U0 ist geeignet festgelegt. Er kann insbesondere geringfügig größer als die Nennspannung sein, die im Zwischenkreis 3 herrschen sollte. Insbesondere sollte der vorbestimmte Spannungswert U0 derart bestimmt sein, dass das erste Schaltelement 11 beim Anschalten der Energieversorgung 2 an den Zwischenkreisumrichter, also beim Aufladen des Zwischenkreises 3 auf seine Nennspannung, geöffnet bleibt. Dadurch wird erreicht, dass die über den eingangsseitigen Gleichrichter 1 in den Zwischenkreis 3 eingespeiste Energie nicht über die Anschlüsse 7, 8 anderen Einrichtungen zugeführt wird, die an die Anschlüsse 7, 8 angeschlossen sind, beispielsweise den Zwischenkreisen von anderen Zwischenkreisumrichtern.

Zur Begrenzung des Stromanstiegs beim Schließen/Durchschalten des ersten Schaltelements 11 ist in der ersten Leitung 9 zwischen dem ersten Schaltelement 11 und dem ersten Anschluss 7 eine erste Induktivität 15 angeordnet. Weiterhin weist der Zwischenkreisumrichter eine Freilaufdiode 16 auf, welche die erste und die zweite Leitung 9, 10 miteinander verbindet. Die Freilaufdiode 16 ist mit der ersten Leitung 9 an einem ersten Diodenknotenpunkt 17 verbunden, mit der zweiten Leitung 10 an einem zweiten Diodenknotenpunkt 18. Der erste Diodenknotenpunkt 17 ist zwischen dem ersten Schaltelement 11 und der ersten Induktivität 15 angeordnet. Der zweite Diodenknotenpunkt 18 kann prinzipiell an beliebiger Stelle mit der zweiten Leitung 10 verbunden sein.

In der Regel weist der Zwischenkreisumrichter einen zusätzlichen Kondensator 19 auf, der ebenfalls die erste und die zweite Leitung 9, 10 miteinander verbindet. Der zusätzliche Kondensator 19 ist mit der ersten Leitung 9 an einem ersten Kondensatorknotenpunkt 20 verbunden, mit der zweiten Leitung 10 an einem zweiten Kondensatorknotenpunkt 21. In diesem Fall ist der erste Kondensatorknotenpunkt 20 zwischen dem ersten Anschluss 7 und der ersten Induktivität 15 angeordnet. Der zweite Kondensatorknotenpunkt 21 ist in der Regel zwischen dem zweiten Anschluss 8 und dem zweiten Diodenknotenpunkt 18 angeordnet.

Der Zwischenkreisumrichter kann weiterhin eine zweite Induktivität (in FIG 1 nicht dargestellt) aufweisen. Wenn die zweite Induktivität vorhanden ist, ist sie in der zweiten Leitung 10 zwischen dem zweiten Anschluss 8 und dem zweiten Diodenknotenpunkt 18 angeordnet. Wenn die zweite Induktivität zusätzlich zu dem zusätzlichen Kondensator 19 vorhanden ist, ist sie in der zweiten Leitung 10 zwischen dem zweiten Kondensatorknotenpunkt 21 und dem zweiten Diodenknotenpunkt 18 angeordnet.

Die erste Induktivität 15 und die Freilaufdiode 16 wirken - gegebenenfalls unterstützt durch den zusätzlichen Kondensator 19 und/oder die zweite Induktivität - mit dem ersten Schaltelement 11 nach Art eines Schaltnetzteils zusammen. Wenn das erste Schaltelement 11 geschlossen wird, kann in der ersten Leitung 9 ein Strom I fließen. Der Strom I fließt in diesem Zustand über das erste Schaltelement 11. Aufgrund der ersten Induktivität 15 und gegebenenfalls auch der zweiten Induktivität steigt der Strom I aber nicht abrupt, sondern nur allmählich an. Wenn umgekehrt das erste Schaltelement 11 geöffnet wird, wird der Strom I durch die erste Induktivität 15 und gegebenenfalls auch die zweite Induktivität getrieben. Der Strom I fällt also nicht abrupt, sondern nur allmählich ab. In diesem Zustand fließt der Strom I über die Freilaufdiode 16.

Es ist im einfachsten Fall möglich, dass die Steuereinrichtung 13 die Ansteuerung des ersten Schaltelements 11 ausschließlich in Abhängigkeit von der im Zwischenkreis 3 herrschenden Zwischenkreisspannung U ermittelt und das erste Schaltelement 11 entsprechend ansteuert. Beispielsweise kann die Steuereinrichtung 13 permanent geöffnet halten, solange die Zwischenkreisspannung U unterhalb des vorbestimmten Spannungswertes U0 liegt. Sobald die Zwischenkreisspannung U den vorbestimmten Spannungswert U0 überschreitet, wird das Schaltelement 11 jedoch mit einem festen Tastverhältnis V angesteuert. Wenn das Tastverhältnis V unter 1 liegt, wird periodisch das Schaltelement 11 während erster Zeiten T1 geschlossen und während zweiter Zeiten T2 geöffnet, wobei die Beziehung

$$V = T1/(T1+T2)$$

gilt. Wenn das Tastverhältnis V bei 1 liegt, bleibt das erste Schaltelement 11 permanent geschlossen. Ein Tastverhältnis V von 0 - das heißt das erste Schaltelement 11 bleibt permanent geöffnet - tritt nur auf, wenn die Zwischenkreisspannung U unterhalb des vorbestimmten Spannungswertes U0 liegt.

Nachfolgend wird in Verbindung mit FIG 1 eine mögliche Ausgestaltung erläutert, bei welcher die Steuereinrichtung 13 das erste Schaltelement 11 nicht nur in Abhängigkeit von der Zwischenkreisspannung U ansteuert, sondern zusätzlich auch den in der ersten Leitung 9 fließenden Strom I berücksichtigt. In diesem Fall ist zusätzlich ein Strommesser 22 vorhanden. Der Strommesser 22 kann entsprechend der Darstellung in FIG 1 in der Nähe des ersten Anschlusses 7 in der ersten Leitung 9 angeordnet sein, insbesondere zwischen dem ersten Kondensatorknotenpunkt 20 und dem ersten Anschluss 7. Der Strommesser 22 kann aber auch an anderer Stelle in der ersten Leitung 9 angeordnet sein, beispielsweise zwischen dem Zwischenkreiskondensator 4 und dem ersten Schaltelement 11.

Ebenso kann der Strommesser 22 alternativ in der zweiten Leitung 10 angeordnet sein.

Der Strommesser 22 erfasst den Strom I und führt einen entsprechenden Messwert der Steuereinrichtung 13 zu. Die Steuereinrichtung 13 steuert in diesem Fall das erste Schaltelement 11 in Abhängigkeit von dem erfassten Spannungswert U und in Abhängigkeit von dem erfassten Stromwert I an. Der Spannungswert U kann in diesem Fall beispielsweise (rein binär) dafür ausschlaggebend sein, ob das erste Schaltelement 11 überhaupt geschlossen wird. Insbesondere bleibt in diesem Fall das erste Schaltelement 11 geöffnet bzw. gesperrt, wenn und solange der erfasste Spannungswert U kleiner als der vorbestimmte Spannungswert U0 ist. Ist der erfasste Spannungswert U hingegen größer als der vorbestimmte Spannungswert U0, wird das erste Schaltelement 11 temporär geschlossen und wieder geöffnet, bis der erfasste Spannungswert U wieder unter den vorbestimmten Spannungswert U0 sinkt. Insbesondere kann die Steuereinrichtung 13 das erste Schaltelement 11 schließen und sodann geschlossen halten, bis der Strom I auf einen oberen Grenzwert angestiegen ist. Danach öffnet die Steuereinrichtung 13 das erste Schaltelement 11 und hält es sodann geöffnet, bis der Strom I auf einen unteren Grenzwert abgesunken ist. Das Tastverhältnis V ist in diesem Fall somit nicht von vornherein bestimmt, sondern ergibt sich durch den Strom I.

Es ist auch möglich, dass die Steuereinrichtung 13 das erste Schaltelement 11 in Abhängigkeit vom Produkt der Zwischenkreisspannung U mit dem Strom I ansteuert. Insbesondere ist es möglich, dass die Steuereinrichtung 13 das erste Schaltelement 11 geöffnet bzw. gesperrt hält, wenn und solange der erfasste Spannungswert U kleiner als der vorbestimmte Spannungswert U0 ist. Wenn hingegen der erfasste Spannungswert U größer als der vorbestimmte Spannungswert U0 ist, wird das erste Schaltelement 11 temporär geschlossen und wieder geöffnet, bis der erfasste Spannungswert U wieder unter den vorbestimmten Spannungswert U0 sinkt. Insbesondere kann die Steuereinrichtung 13 das erste Schaltelement 11 schließen und sodann geschlossen halten, bis das Produkt der Zwischenkreisspannung U mit dem Strom I auf einen oberen Grenzwert angestiegen ist. Danach öffnet die Steuereinrichtung 13 das erste Schaltelement 11 und hält es sodann geöffnet, bis das Produkt der Zwischenkreisspannung U mit dem Strom I auf einen unteren Grenzwert abgesunken ist. Das Tastverhältnis V ist somit auch in diesem Fall nicht von vornherein bestimmt, sondern ergibt sich durch das Produkt der Zwischenkreisspannung U mit dem Strom I.

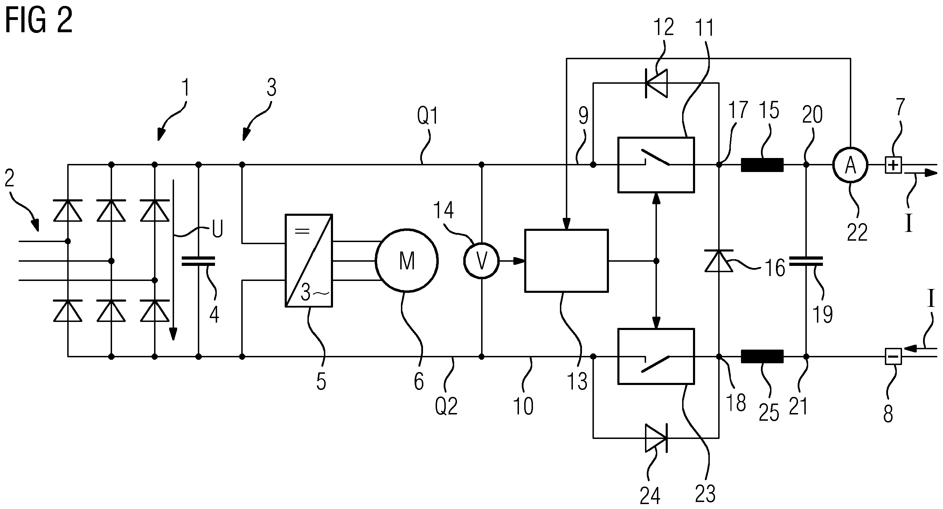

Nachfolgend wird in Verbindung mit FIG 2 eine weitere Ausgestaltung des Zwischenkreisumrichters erläutert. Die Ausgestaltung gemäß FIG 2 baut auf der Ausgestaltung von FIG 1 auf. Die dortigen Elemente 1 bis 22 werden daher nicht nochmals erläutert.

Gemäß FIG 2 ist nicht nur in der ersten Leitung 9 das erste Schaltelement 11 angeordnet, sondern zusätzlich in der zweiten Leitung 10 ein zweites Schaltelement 23 angeordnet. Bei dem zweiten Schaltelement 23 kann es sich analog zum ersten Schaltelement 11 beispielsweise um einen MOSFET handeln. Dem zweiten Schaltelement 23 ist analog zum ersten Schaltelement 11 eine zweite Diode 24 parallel geschaltet. Die zweite Diode 24 ist analog zur ersten Diode 12 derart geschaltet, dass über die zweite Diode 24 der Zwischenkreiskondensator 4 zwar geladen werden kann, nicht aber entladen werden kann.

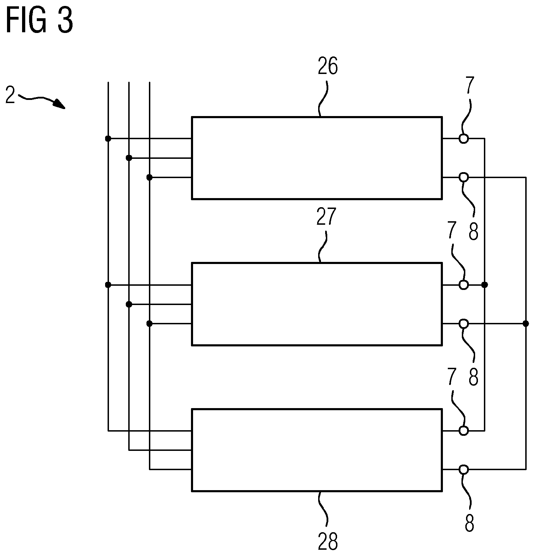

Wenn, wie in FIG 2 (und auch in FIG 1) dargestellt, das erste Potenzial Q1 größer als das zweite Potenzial Q2 ist, ist also die Anode der zweiten Diode 24 zum Zwischenkreis 3 hin angeordnet, die Kathode zum zweiten Anschluss 8 hin. Wenn das zweite Schaltelement 23 geöffnet ist, können somit von den Anschlüssen 7, 8 aus über die zweite Diode 24 der Zwischenkreis 3 mit ihm der Zwischenkreiskondensator 4 zwar geladen werden, nicht aber entladen. Die zweite Diode 24 kann eine eigenständige Diode sein, also ein vom zweiten Schaltelement 23 verschiedenes Bauelement. In der Regel handelt es sich bei der zweiten Diode 24 jedoch - analog zur ersten Diode 12 - um eine dem zweiten Schaltelement 23 intrinsische Diode. Der zweite Diodenknotenpunkt 18 ist im Falle der Ausgestaltung gemäß FIG 3 zwischen dem zweiten Anschluss 8 und dem zweiten Schaltelement 23 mit der zweiten Leitung 10 verbunden. Falls der zusätzliche Kondensator 19 vorhanden ist, ist weiterhin vorzugsweise der zweite Kondensatorknotenpunkt 21 zwischen dem zweiten Anschluss 8 und dem zweiten Diodenknotenpunkt 18 angeordnet.

Vorzugsweise - dies ist aber nicht zwingend - ist weiterhin in der zweiten Leitung 10 eine zweite Induktivität 25 angeordnet. Die zweite Induktivität 25 ist in diesem Fall zwischen dem zweiten Diodenknotenpunkt 18 und dem zweiten Anschluss angeordnet. Falls zusätzlich auch der zusätzliche Kondensator 19 vorhanden ist, ist der zweite Kondensatorknotenpunkt 21 zwischen dem zweiten Anschluss 8 und der zweiten Induktivität 25 angeordnet.

Im Falle des Vorhandenseins des zweiten Schaltelements 23 steuert die Steuereinrichtung 13 zusätzlich zum ersten Schaltelement 11 auch das zweite Schaltelement 23 in Abhängigkeit von der Zwischenkreisspannung U an. Vorzugsweise erfolgt hierbei eine gleichartige Ansteuerung. Zu jedem Zeitpunkt, zu dem die Steuereinrichtung 13 das erste Schaltelement 11 durchschaltet, schaltet sie also vorzugsweise auch das zweite Schaltelement 23 durch. Ebenso sperrt die Steuereinrichtung 13 vorzugsweise zu jedem Zeitpunkt, zu dem sie das erste Schaltelement 11 sperrt, auch das zweite Schaltelement 23. Im übrigen gelten die obigen Ausführungen zu FIG 1. Es ist also sowohl eine Ansteuerung des zweiten Schaltelements 23 ausschließlich in Abhängigkeit von der Zwischenkreisspannung U als auch eine Ansteuerung in Abhängigkeit von sowohl der Zwischenkreisspannung U als auch dem Strom I möglich, auch in Abhängigkeit vom Produkt von Zwischenkreisspannung U und Strom I.

Entsprechend der Darstellung in FIG 3 sind mehrere Zwischenkreisumrichter vorhanden. Die Zwischenkreisumrichter sind in FIG 3 nur schematisch dargestellt. Sie sind insbesondere so ausgestaltet, wie dies obenstehend in Verbindung mit den FIG 1 und 2 erläutert wurde. Die Zwischenkreisumrichter müssen nicht gleichartig ausgestaltet sein. Es ist möglich, dass die Zwischenkreisumrichter verschiedene Ausgestaltungen der vorliegenden Erfindung implementieren.

In FIG 3 sind rein beispielhaft drei Zwischenkreisumrichter dargestellt, die mit den Bezugszeichen 26, 27 und 28 versehen sind. Es könnten aber auch nur zwei oder umgekehrt mehr als drei Zwischenkreisumrichter vorhanden sein. Gemäß FIG 3 sind die ersten Anschlüsse 7 der Zwischenkreisumrichter 26, 27, 28 miteinander verbunden. Ebenso sind auch die zweiten Anschlüsse 8 der Zwischenkreisumrichter 26, 27, 28 miteinander verbunden. Dadurch kann in dem Fall, dass in einem der Zwischenkreisumrichter 26, 27, 28 - beispielsweise im Zwischenkreisumrichter 26 - aufgrund einer Rückspeisung durch die dortige Last 6 die dortige Zwischenkreisspannung U ansteigt, durch entsprechende Ansteuerung der Schaltelemente 11, 23 dieses Zwischenkreisumrichters aus dem Zwischenkreis 3 dieses Zwischenkreisumrichters Energie entnommen und den Zwischenkreisen 3 der anderen Zwischenkreisumrichter - beispielsweise den Zwischenkreisen 3 der Zwischenkreisumrichter 27 und 28 - zugeführt werden.

Zusammengefasst betrifft die vorliegende Erfindung somit folgenden Sachverhalt:

Zwischenkreisumrichter weisen Zwischenkreise 3 mit Zwischenkreiskondensatoren 4 auf, die über Gleichrichter 1 mit einer Energieversorgung 2 und über Wechselrichter 5 mit Lasten 6 verbunden sind. Die Zwischenkreisumrichter weisen zwei Anschlüsse 7, 8 auf, die über Leitungen 9, 10 mit den Potenzialen Q1, Q2 der Zwischenkreise 3 verbunden sind. In je einer der Leitungen 9 ist ein Schaltelement 11 angeordnet, dem eine Diode 12 parallel geschaltet ist. Dadurch können bei geöffneten Schaltelementen 11 die Zwischenkreiskondensatoren 4 über die Dioden 12 zwar geladen werden, nicht aber entladen. Bei geschlossenen Schaltelementen 11 können die Zwischenkreiskondensatoren 4 über die Schaltelemente 11 zumindest entladen werden. Die Zwischenkreisumrichter weisen Steuereinrichtungen 13 auf, welche die Schaltelemente 11 in Abhängigkeit von den Zwischenkreisspannungen U ansteuern. In den Leitungen 9 sind zwischen den Schaltelementen 11 und den Anschlüssen 7 Induktivitäten 15 angeordnet. Die Zwischenkreisumrichter weisen Freilaufdioden 16 auf, welche die Leitungen 9, 10 miteinander verbinden. Diodenknotenpunkte 20, an denen die Freilaufdioden 16 mit der jeweils einen Leitung 9 verbunden sind, sind zwischen den Schaltelementen 11 und den Induktivitäten 15 angeordnet. Gleichartige Anschlüsse der Zwischenkreisumrichter sind miteinander verbunden.

Die vorliegende Erfindung weist viele Vorteile auf. Insbesondere werden mehrere, über ihre Anschlüsse 7, 8 miteinander verbundenen Zwischenkreisumrichter 26, 27, 28 im Normalbetrieb unabhängig voneinander betrieben. Der Normalbetrieb umfasst das Anschalten an die Energieversorgung 2, die kontinuierliche Speisung über die Energieversorgung 2 und auch das erneute Anschalten der Energieversorgung, beispielsweise nach einer Kurzzeitunterbrechung. Auch bei stark unterschiedlichen Belastungen und auch beim Auftreten eines Kurzschluss fließen keine Ausgleichsströme zwischen den Zwischenkreisumrichtern 26, 27, 28. Die thermische Belastung der verwendeten Komponenten der Zwischenkreisumrichter 26, 27, 28 kann reduziert werden und so die Lebensdauer der Komponenten erhöht werden. Eine Kopplung der Zwischenkreisumrichter 26, 27, 28 erfolgt nur dann, wenn in einem der Zwischenkreisumrichter 26, 27, 28 eine überhöhte Zwischenkreisspannung U auftritt. In diesem Fall muss überschüssige Energie nicht in Wärme umgesetzt werden, sondern kann einem der anderen Zwischenkreisumrichter 26, 27, 28 zugeführt und dort genutzt werden. Die Zwischenkreisumrichter 26, 27, 28 können unabhängig voneinander dimensioniert und ausgelegt werden. Eine Überdimensionierung ist nicht mehr erforderlich. Die Charakteristika der Steuereinrichtung 13 des jeweiligen Zwischenkreisumrichters 26, 27, 28 kann individuell und sehr flexibel an die Einsatzbedingungen und auch an die Leistungsfähigkeit der Schalter 11, 23 angepasst werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Ansprüche zu verlassen.

**Patentansprüche**

1. Gruppe von Zwischenkreisumrichtern (26, 27, 28),

   - wobei die Zwischenkreisumrichter (26, 27, 28) jeweils einen Zwischenkreis (3) mit einem Zwischenkreiskondensator (4) aufweisen,
   - wobei die Zwischenkreise (3) und mit ihnen die Zwischenkreiskondensatoren (4) über einen jeweiligen eingangsseitigen Gleichrichter (1) mit einer Energieversorgung (2) verbindbar sind und über einen jeweiligen ausgangsseitigen Wechselrichter (5) mit einer jeweiligen Last (6) verbindbar sind,
   - wobei die Zwischenkreisumrichter (26, 27, 28) jeweils einen ersten und einen zweiten Anschluss (7, 8) aufweisen, die über eine jeweilige erste und eine jeweilige zweite Leitung (9, 10) mit einem jeweiligen ersten und einem jeweiligen zweiten Potenzial (Q1, Q2) des jeweiligen Zwischenkreises (3) verbunden sind,
   - wobei in der jeweiligen ersten Leitung (9) ein jeweiliges erstes Schaltelement (11) angeordnet ist, dem eine jeweilige erste Diode (12) parallel geschaltet ist, so dass bei geöffnetem jeweiligem erstem Schaltelement (11) der jeweilige Zwischenkreiskondensator (4) über die jeweilige erste Diode (12) zwar geladen werden kann, nicht aber entladen werden kann und bei geschlossenem jeweiligem erstem Schaltelement (11) der jeweilige Zwischenkreiskondensator (4) über das jeweilige erste Schaltelement (11) zumindest entladen werden kann,
   - wobei der jeweilige Zwischenkreisumrichter (26, 27, 28) eine jeweilige Steuereinrichtung (13) aufweist, welche eingerichtet ist, das jeweilige erste Schaltelement (11) in Abhängigkeit von einer im jeweiligen Zwischenkreis (3) herrschenden jeweiligen Zwischenkreisspannung (U) anzusteuern,
   - wobei in der jeweiligen ersten Leitung (9) zwischen dem jeweiligen ersten Schaltelement (11) und dem jeweiligen ersten Anschluss (7) eine jeweilige erste Induktivität (15) angeordnet ist,
   - wobei der jeweilige Zwischenkreisumrichter (26, 27, 28) eine jeweilige Freilaufdiode (16) aufweist, welche die jeweilige erste und die jeweilige zweite Leitung (9, 10) miteinander verbindet,
   - wobei ein jeweiliger erster Diodenknotenpunkt (17), an dem die jeweilige Freilaufdiode (16) mit der jeweiligen ersten Leitung (9) verbunden ist, zwischen dem jeweiligen ersten Schaltelement (11) und der jeweiligen ersten Induktivität (15) angeordnet ist und

- wobei die ersten Anschlüsse (7) der Zwischenkreisumrichter (26, 27, 28) miteinander verbunden sind und die zweiten Anschlüsse (8) der Zwischenkreisumrichter (26, 27, 28) miteinander verbunden sind,

- wobei in der zweiten Leitung (10) des jeweiligen Zwischenkreisumrichters (26, 27, 28) ein jeweiliges zweites Schaltelement (23) angeordnet ist, dem eine jeweilige zweite Diode (24) parallel geschaltet ist, so dass bei geöffnetem jeweiligem zweitem Schaltelement (23) der Zwischenkreiskondensator (4) dieses Zwischenkreisumrichters (26, 27, 28) über die jeweilige zweite Diode (24) zwar geladen werden kann, nicht aber entladen werden kann und bei geschlossenem jeweiligem zweitem Schaltelement (23) der Zwischenkreiskondensator (4) dieses Zwischenkreisumrichters (26, 27, 28) über das jeweilige zweite Schaltelement (23) zumindest entladen werden kann,

- wobei die Steuereinrichtung (13) eingerichtet ist, zusätzlich zum ersten Schaltelement (11) dieses Zwischenkreisumrichters (26, 27, 28) auch das zweite Schaltelement (23) in Abhängigkeit von der im Zwischenkreis (3) dieses Zwischenkreisumrichters (26, 27, 28) herrschenden Zwischenkreisspannung (U) anzusteuern und

- wobei ein zweiter Diodenknotenpunkt (18), an dem die Freilaufdiode (16) dieses Zwischenkreisumrichters (26, 27, 28) mit der zweiten Leitung (10) dieses Zwischenkreisumrichters (26, 27, 28) verbunden ist, zwischen dem zweiten Anschluss (8) dieses Zwischenkreisumrichters (26, 27, 28) und dem zweiten Schaltelement (23) angeordnet ist.

2.  Gruppe von Zwischenkreisumrichtern nach Anspruch 1, wobei die Steuereinrichtung (13) mindestens eines der Zwischenkreisumrichter (26, 27, 28) dessen erstes Schaltelement (11) ausschließlich in Abhängigkeit von der im Zwischenkreis (3) dieses Zwischenkreisumrichters (26, 27, 28) herrschenden Zwischenkreisspannung (U) ansteuert.

3.  Gruppe von Zwischenkreisumrichtern nach Anspruch 1, wobei die Steuereinrichtung (13) eingerichtet ist, mindestens eines der Zwischenkreisumrichter (26, 27, 28) dessen erstes Schaltelement (11) in Abhängigkeit von der im Zwischenkreis (3) dieses Zwischenkreisumrichters (26, 27, 28) herrschenden Zwischenkreisspannung (U) und zusätzlich in Abhängigkeit von einem über die erste Leitung (9) oder die zweite Leitung (10) dieses Zwischenkreisumrichters (26, 27, 28) fließenden Strom (I) anzusteuern.

4.  Gruppe von Zwischenkreisumrichtern nach Anspruch 3, wobei die Steuereinrichtung (13) dieses Zwischenkreisumrichters (26, 27, 28) eingerichtet ist, dessen erstes Schaltelement (11) in Abhängigkeit vom Produkt der im Zwischenkreis (3) dieses Zwischenkreisumrichters (26, 27, 28) herrschenden Zwischenkreisspannung (U) und dem über die erste Leitung (9) oder die zweite Leitung (10) dieses Zwischenkreisumrichters (26, 27, 28) fließenden Strom (I) anzusteuern.

5.  Gruppe von Zwischenkreisumrichtern nach einem der obigen Ansprüche, wobei die Steuereinrichtung (13) eingerichtet ist, das zweite Schaltelement (23) gleichartig zum ersten Schaltelement (11) des jeweiligen Zwischenkreisumrichters (26, 27, 28) anzusteuern.

6.  Gruppe von Zwischenkreisumrichtern nach einem der obigen Ansprüche, wobei in der zweiten Leitung (10) eines der Zwischenkreisumrichter (26, 27, 28) zwischen dem zweiten Diodenknotenpunkt (18) und dem zweiten Anschluss (8) dieses Zwischenkreisumrichters (26, 27, 28) eine zweite Induktivität (25) angeordnet ist.

7.  Gruppe von Zwischenkreisumrichtern nach Anspruch 6, wobei

- dieser Zwischenkreisumrichter (26, 27, 28) einen zusätzlichen Kondensator (19) aufweist, der die erste und die zweite Leitung (9, 10) dieses Zwischenkreisumrichters (26, 27, 28) miteinander verbindet,

- ein erster Kondensatorknotenpunkt (20), an dem der zusätzliche Kondensator (19) mit der ersten Leitung (9) dieses Zwischenkreisumrichters (26, 27, 28) verbunden ist, zwischen dem ersten Anschluss (7) und der ersten Induktivität (15) dieses Zwischenkreisumrichters (26, 27, 28) angeordnet ist und

- ein zweiter Kondensatorknotenpunkt (21), an dem der zusätzliche Kondensator (19) mit der zweiten Leitung (10) dieses Zwischenkreisumrichters (26, 27, 28) verbunden ist, zwischen dem zweiten Anschluss (8) dieses Zwischenkreisumrichters (26, 27, 28) und der zweiten Induktivität (25) angeordnet ist.

8.  Gruppe von Zwischenkreisumrichtern nach einem der Ansprüche 1 bis 6, wobei

- mindestens einer der Zwischenkreisumrichter (26, 27, 28) einen zusätzlichen Kondensator (19) aufweist, der die erste und die zweite Leitung (9, 10) dieses Zwischenkreisumrichters (26, 27, 28) miteinander verbindet,

- ein erster Kondensatorknotenpunkt (20), an dem der zusätzliche Kondensator (19) mit der ersten Leitung (9) dieses Zwischenkreisumrichters (26, 27, 28) verbunden ist, zwischen dem ersten Anschluss (7) und der ersten Induktivität (15) dieses Zwischenkreisumrichters (26, 27, 28) angeordnet ist und

- ein zweiter Kondensatorknotenpunkt (21), an dem der zusätzliche Kondensator (19) mit der zweiten Leitung (10) dieses Zwischenkreisumrichters (26, 27, 28) verbunden ist, zwischen dem zweiten Anschluss (8) dieses Zwischenkreisumrichters (26, 27, 28) und einem zweiten Diodenknotenpunkt (18) angeordnet ist, an dem die Freilaufdiode (16) dieses Zwischenkreisumrichters (26, 27, 28) mit der zweiten Leitung (10) dieses Zwischenkreisumrichters (26, 27, 28) verbunden ist.

9. Gruppe von Zwischenkreisumrichtern nach einem der obigen Ansprüche,
wobei die dem ersten Schaltelement (11) mindestens eines der Zwischenkreisumrichter (26, 27, 28) parallel geschaltete erste Diode (12) eine dem ersten Schaltelement (11) dieses Zwischenkreisumrichters (26, 27, 28) intrinsische Diode ist.

10. Gruppe von Zwischenkreisumrichtern nach einem der obigen Ansprüche,
wobei der eingangsseitige Gleichrichter (1) mindestens eines der Zwischenkreisumrichter (26, 27, 28) als ungesteuerter Gleichrichter ausgebildet ist.

**Claims**

1. Group of DC link converters (26, 27, 28),

- wherein the DC link converters (26, 27, 28) each have a DC link (3) with a DC link capacitor (4),
- wherein the DC links (3) and with them the DC link capacitors (4) can be connected to a power supply (2) via a respective input-side rectifier (1) and can be connected to a respective load (6) via a respective output-side inverter (5),
- wherein the DC link converters (26, 27, 28) in each case have a first and a second terminal (7, 8), which are connected to a respective first and a respective second potential (Q1, Q2) of the respective DC link (3) via a respective first and a respective second line (9, 10),
- wherein a respective first switching element (11) is arranged in the respective first line (9), a respective first diode (12) being connected in parallel with said switching element, so that when the respective first switching element (11) is open, the respective DC link capacitor (4) can be charged via the respective first diode (12) but cannot discharge, and when the respective first switching element (11) is closed, the respective DC link capacitor (4) can at least be discharged via the respective first switching element (11),
- wherein the respective DC link converter (26, 27, 28) has a respective control device (13), which is designed to control the respective first switching element (11) as a function of a respective DC link voltage (U) prevailing in the respective DC link (3),
- wherein a respective first inductor (15) is arranged in the respective first line (9) between the respective first switching element (11) and the respective first terminal (7),
- wherein the respective DC link converter (26, 27, 28) has a respective flyback diode (16), which connects the respective first and the respective second line (9, 10) to one another,
- wherein a respective first diode nodal point (17), to which the respective flyback diode (16) with the respective first line (9) is connected, is arranged between the respective first switching element (11) and the respective first inductor (15) and
- wherein the first terminals (7) of the DC link converter (26, 27, 28) are connected to one another and the second terminals (8) of the DC link converter (26, 27, 28) are connected to one another
- wherein a respective second switching element (23) is arranged in the second line (10) of the respective DC link converter (26, 27, 28), a respective second diode (24) is connected in parallel therewith, so that when the respective second switching element (23) is open, the DC link capacitor (4) of this DC link converter (26, 27, 28) can be charged via the respective second diode (24), but cannot be discharged and when the respective second switching element (23) is closed the DC link capacitor (4) of this DC link converter (26, 27, 28) can at least be discharged via the respective second switching element (23),
- wherein in addition to the first switching element (11) of this DC link converter (26, 27, 28), the control device (13) is also designed to control the second switching element (23) as a function of the DC link voltage (U) prevailing in the DC link (3) of this DC link converter (26, 27, 28) and
- wherein a second diode nodal point (18), to which the flyback diode (16) of this DC link converter (26, 27, 28) with the second line (10) of this DC link converter (26, 27, 28) is connected, is arranged between the second terminal (8) of this DC link converter (26, 27, 28) and the second switching element (23).

**2.** Group of DC link converters according to claim 1, wherein the control device (13) of at least one of the DC link converters (26, 27, 28) controls its first switching element (11) exclusively as a function of the DC link voltage (U) prevailing in the DC link (3) of this DC link converter (26, 27, 28).

**3.** Group of DC link converters according to claim 1, wherein the control device (13) is designed, of at least one of the DC link converters (26, 27, 28), to control its first switching element (11) as a function of the DC link voltage (U) prevailing in the DC link (3) of this DC link converter (26, 27, 28) and in addition as a function of a current (I) flowing via the first line (9) or the second line (10) of this DC link converter (26, 27, 28).

**4.** Group of DC link converters according to claim 3, wherein the control device (13) of this DC link converter (26, 27, 28) is designed to control its first switching element (11) as a function of the product of the DC link voltage (U) prevailing in the DC link (3) of this DC link converter (26, 27, 28) and the current (I) flowing via the first line (9) or the second line (10) of this DC link converter (26, 27, 28).

**5.** Group of DC link converters according to one of the above claims, wherein the control device (13) is designed to control the second switching element (23) in a similar manner to the first switching element (11) of the respective DC link converter (26, 27, 28).

**6.** Group of DC link converters according to one of the above claims, wherein a second inductor (25) is arranged in the second line (10) of one of the DC link converters (26, 27, 28) between the second diode nodal point (18) and the second terminal (8) of this DC link converter (26, 27, 28).

**7.** Group of DC link converters according to claim 6, wherein

- this DC link converter (26, 27, 28) has an additional capacitor (19), which connects the first and the second line (9, 10) of this DC link converter (26, 27, 28) to one another,
- a first capacitor nodal point (20), to which the additional capacitor (19) with the first line (9) of this DC link converter (26, 27, 28) is connected, is arranged between the first terminal (7) and the first inductor (15) of this DC link converter (26, 27, 28) and
- a second capacitor nodal point (21), to which the additional capacitor (19) with the second line (10) of this DC link converter (26, 27, 28) is connected, is arranged between the second terminal (8) of this DC link converter (26, 27, 28) and the second inductor (25).

**8.** Group of DC link converters according to one of claim 1 to 6, wherein

- at least one of the DC link converters (26, 27, 28) has an additional capacitor (19), which connects the first and the second line (9, 10) of this DC link converter (26, 27, 28) to one another,
- a first capacitor nodal point (20), to which the additional capacitor (19) with the first line (9) of this DC link converter (26, 27, 28) is connected, is arranged between the first terminal (7) and the first inductor (15) of this DC link converter (26, 27, 28) and
- a second capacitor nodal point (21), to which the additional capacitor (19) with the second line (10) of this DC link converter (26, 27, 28) is connected, is arranged between the second terminal (8) of this DC link converter (26, 27, 28) and a second diode nodal point (18), to which the flyback diode (16) of this DC link converter (26, 27, 28) with the second line (10) of this DC link converter (26, 27, 28) is connected.

**9.** Group of DC link converters according to one of the above claims, wherein the first diode (12) connected in parallel with the first switching element (11) of at least one of the DC link converters (26, 27, 28) is a diode which is intrinsic to the first switching element (11) of this DC link converter (26, 27, 28).

**10.** Group of DC link converters according to one of the above claims, wherein the input-side rectifier (1) of at least one of the DC link converters (26, 27, 28) is embodied as an uncontrolled rectifier.

**Revendications**

**1.** Groupe de convertisseurs (26, 27, 28) à circuit intermédiaire,

- dans lequel les convertisseurs (26, 27, 28) à circuit intermédiaire ont chacun un circuit (3) intermédiaire ayant un condensateur (4) de circuit intermédiaire,
- dans lequel les circuits (3) intermédiaires et avec eux les condensateurs (4) de circuit intermédiaire peuvent être reliés à une alimentation (2) en énergie par un redresseur (1) respectif du côté de l'entrée et peuvent être reliés à une charge (6) respective par un onduleur (5) respectif du côté de la sortie,

- dans lequel les convertisseurs (26, 27, 28) à circuit intermédiaire ont chacun une première et une deuxième bornes (7, 8), qui sont reliées par l'intermédiaire d'une première et d'une deuxième lignes (9, 10) respective à un premier et à un deuxième potentiels (Q1, Q2) respectifs du circuit (3) intermédiaire respectif,

- dans lequel, dans la première ligne (9) respective est monté un premier élément (11) respectif de coupure avec lequel une première diode (12) respective est montée en parallèle, de manière à ce que, lorsque le premier élément (11) de coupure respectif est ouvert, le condensateur (4) respectif de circuit intermédiaire peut certes être chargé par l'intermédiaire de la première diode (12) respective, mais ne peut pas être déchargé et, lorsque le premier élément (11) de coupure respectif est fermé, le condensateur (4) de circuit intermédiaire respectif peut être au moins déchargé par le premier élément (11) de coupure respectif,

- dans lequel le convertisseur (26, 27, 28) à circuit intermédiaire respectif a un dispositif (13) respectif de commande, qui est conçu pour commander le premier élément (11) de coupure respectif en fonction d'une tension (U) de circuit intermédiaire respective régnant dans le circuit (3) intermédiaire respectif,

- dans lequel une première inductance (15) respective est montée dans la première ligne (9) respective entre le premier élément (11) de coupure respectif et la première borne (7) respective,

- dans lequel le convertisseur (26, 27, 28) à circuit intermédiaire respectif a une diode (16) de roue libre respective, qui relie respectivement la première et la deuxième lignes (9, 10) entre elles,

- dans lequel un premier point (17) nodal de diode respectif, où la diode (16) de roue libre respective est reliée à la première ligne (9) respective, est disposé entre le premier élément (11) de coupure respectif et la première inductance (15) respective et

- dans lequel les premières bornes (7) des convertisseurs (26, 27, 28) à circuit intermédiaire sont reliées entre elles et les deuxièmes bornes (8) des convertisseurs (26, 27, 28) à circuit intermédiaire sont reliées entre elles,

- dans lequel, dans la deuxième ligne (10) du convertisseur (26, 27, 28) à circuit intermédiaire respectif est monté un deuxième élément (23) de coupure respectif avec lequel une deuxième diode (24) respective est montée en parallèle, de sorte que, lorsque le deuxième élément (23) de coupure est ouvert, le condensateur (4) de circuit intermédiaire de ce convertisseur (26, 27, 28) à circuit intermédiaire peut certes être chargé par l'intermédiaire de la deuxième diode (24), mais ne peut pas être déchargé et, lorsque le deuxième élément (23) de coupure respectif est fermé, le condensateur (4) de circuit intermédiaire de ce convertisseur (26, 27, 28) à circuit intermédiaire peut au moins être déchargé par le deuxième élément (23) de coupure respectif,

- dans lequel le dispositif (13) de commande est conçu pour commander, en plus du premier élément (11) de coupure de ce convertisseur (26, 27, 28) à circuit intermédiaire, également le deuxième élément (23) de coupure en fonction de la tension (U) de circuit intermédiaire régnant dans le circuit (3) intermédiaire de ce convertisseur (26, 27, 28) à circuit intermédiaire, et

- dans lequel un deuxième point (18) nodal de diode, où la diode (16) de roue libre de ce convertisseur (26, 27, 28) à circuit intermédiaire est reliée à la deuxième ligne (10) de ce convertisseur (26, 27, 28) à circuit intermédiaire est disposé entre la deuxième borne (8) de ce convertisseur (26, 27, 28) à circuit intermédiaire et le deuxième élément (23) de coupure.

2. Groupe de convertisseurs à circuit intermédiaire suivant la revendication 1,
dans lequel le dispositif (13) de commande d'au moins l'un des convertisseurs (26, 27, 28) à circuit intermédiaire commande son premier élément (11) de coupure exclusivement en fonction de la tension (U) de circuit intermédiaire régnant dans le circuit (3) intermédiaire de ce convertisseur (26, 27, 28) à circuit intermédiaire.

3. Groupe de convertisseurs à circuit intermédiaire suivant la revendication 1,
dans lequel
le dispositif (13) de commande d'au moins l'un des convertisseurs (26, 27, 28) à circuit intermédiaire est conçu pour commander son premier élément (11) de coupure en fonction de la tension (U) de circuit intermédiaire régnant dans le circuit (3) intermédiaire de ce convertisseur (26, 27, 28) à circuit intermédiaire et en outre en fonction d'un courant (I) passant dans la première ligne (9) ou dans la deuxième ligne (10) de ce convertisseur (26, 27, 28) à circuit intermédiaire.

4. Groupe de convertisseurs à circuit intermédiaire suivant la revendication 3,
dans lequel
le dispositif (13) de commande de ce convertisseur (26, 27, 28) à circuit intermédiaire est conçu pour commander son premier élément (11) de coupure, en fonction du produit de la tension (U) de circuit intermédiaire régnant dans le circuit (3) intermédiaire de ce convertisseur (26, 27, 28) à circuit intermédiaire par le courant (I) passant dans la première ligne (9) ou la deuxième ligne (10) de ce convertisseur (26, 27, 28) à circuit intermédiaire.

5. Groupe de convertisseurs à circuit intermédiaire suivant l'une des revendications précédentes, dans lequel le dispositif (13) de commande est conçu pour commander le deuxième élément (23) de coupure de la même façon que le premier élément (11) de coupure du convertisseur (26, 27, 28) de circuit intermédiaire respectif.

6. Groupe de convertisseurs à circuit intermédiaire suivant l'une des revendications précédentes, dans lequel dans la deuxième ligne (10) de l'un des convertisseurs (26, 27, 28) à circuit intermédiaire une deuxième inductance (25) est montée entre le deuxième point (18) nodal de diode et la deuxième borne (8) de ce convertisseur (26, 27, 28) à circuit intermédiaire.

7. Groupe de convertisseurs à circuit intermédiaire suivant la revendication 6, dans lequel

   - ce convertisseur (26, 27, 28) à circuit intermédiaire a un condensateur (19) supplémentaire, qui relie entre elles la première et la deuxième lignes (9, 10) de ce convertisseur (26, 27, 28) à circuit intermédiaire,
   - un premier point (20) nodal de condensateur, où le condensateur (19) supplémentaire est relié à la première ligne (9) de ce convertisseur (26, 27, 28) à circuit intermédiaire, est disposé entre la première borne (7) et la première inductance (15) de ce convertisseur (26, 27, 28) à circuit intermédiaire, et
   - un deuxième point (21) nodal de condensateur, ou le condensateur (19) supplémentaire est relié à la deuxième ligne (10) de ce convertisseur (26, 27, 28) à circuit intermédiaire, est disposé entre la deuxième borne (8) de ce convertisseur (26, 27, 28) à circuit intermédiaire et la deuxième inductance (25) .

8. Groupe de convertisseurs à circuit intermédiaire suivant l'une des revendications 1 à 6, dans lequel

   - au moins l'un des convertisseurs (26, 27, 28) à circuit intermédiaire a un condensateur (19) supplémentaire, qui relie entre elles la première et la deuxième lignes (9, 10) de ce convertisseur (26, 27, 28) à circuit intermédiaire,
   - un premier point (20) nodal de condensateur, où le condensateur (19) supplémentaire est relié à la première ligne (9) de ce convertisseur (26, 27, 28) à circuit intermédiaire, est disposé entre la première borne (7) et la première inductance (15) de ce convertisseur (26, 27, 28) à circuit intermédiaire, et
   - un deuxième point (21) nodal de condensateur, où le condensateur (19) supplémentaire est relié à la deuxième ligne (10) de ce convertisseur (26, 27, 28) à circuit intermédiaire, est disposé entre la deuxième borne (8) de ce convertisseur (26, 27, 28) à circuit intermédiaire et un deuxième point (18) nodal de diode, où la diode (16) de roue libre de ce convertisseur (26, 27, 28) à circuit intermédiaire est reliée à la deuxième ligne (10) de ce convertisseur (26, 27, 28) à circuit intermédiaire.

9. Groupe de convertisseurs à circuit intermédiaire suivant l'une des revendications précédentes, dans lequel la première diode (12) montée en parallèle avec le premier élément (11) de coupure d'au moins l'un des convertisseurs (26, 27, 28) à circuit intermédiaire est une diode intrinsèque au premier élément (11) de coupure de ce convertisseur (26, 27, 28) à circuit intermédiaire.

10. Groupe de convertisseurs à circuit intermédiaire suivant l'une des revendications précédentes, dans lequel le redresseur (1) du côté de l'entrée d'au moins l'un des convertisseurs (26, 27, 28) à circuit intermédiaire est constitué sous la forme d'un redresseur non commandé.

FIG 1

EP 3 695 500 B1

FIG 2

## FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20170229994 A1
- JP H10164862 A
- JP 2005176475 A